(19) Europäisches Patentamt
European Patent Office
Office européen des brevets

(11) **EP 2 683 050 B1**

(12) **EUROPEAN PATENT SPECIFICATION**

(45) Date of publication and mention of the grant of the patent:
**22.11.2017 Bulletin 2017/47**

(21) Application number: **12755323.8**

(22) Date of filing: **23.02.2012**

(51) Int Cl.:
*H02J 3/38* (2006.01)

(86) International application number:
**PCT/ES2012/070105**

(87) International publication number:
**WO 2012/120168 (13.09.2012 Gazette 2012/37)**

(54) **METHOD AND DEVICE FOR DETECTING ISLAND OPERATION IN DISTRIBUTED ELECTRICITY GENERATION AND FOR PROTECTING THE CONNECTED LOADS IN THE BARS OF THE GENERATORS WHEN ISLAND OPERATION OCCURS**

VERFAHREN UND VORRICHTUNG ZUR ERKENNUNG EINES INSELBETRIEBS IN EINER VERTEILTEN STROMERZEUGUNG UND ZUM SCHUTZ ANGESCHLOSSENER LASTEN IN GENERATORSTANGEN WÄHREND DES INSELBETRIEBS

PROCÉDÉ ET DISPOSITIF POUR LA DÉTECTION D'UNE OPÉRATION ISOLÉE DANS LA GÉNÉRATION ÉLECTRIQUE DISTRIBUÉE ET POUR LA PROTECTION DE CHARGES CONNECTÉES DANS DES BARRES DE GÉNÉRATEURS LORS D'UNE OPÉRATION ISOLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2011 ES 201130295**

(43) Date of publication of application:
**08.01.2014 Bulletin 2014/02**

(73) Proprietor: **Zigor Corporación, S.A.**
**01013 Vitoria (ES)**

(72) Inventors:
• **IRIBARRREN ASENJO, Jose Luis**
  **E-01013 Vitoria (ES)**
• **CORERA CASTY, Santiago**
  **E-20017 Donostia (ES)**
• **BELTZA IGOA, Aitor**
  **E-31820 Etxarri-aranatz (ES)**

(74) Representative: **Carpintero Lopez, Francisco**
**Herrero & Asociados, S.L.**
**Cedaceros 1**
**28014 Madrid (ES)**

(56) References cited:
**EP-A1- 1 764 894    US-A1- 2003 098 671**

• **MOALLEM A ET AL: "An anti-islanding protection scheme for grid-connected distributed power generation systems", POWER, CONTROL AND EMBEDDED SYSTEMS (ICPCES), 2010 INTERNATIONAL CONFERENCE ON, IEEE, PISCATAWAY, NJ, USA, 29 November 2010 (2010-11-29), pages 1-5, XP031857949, ISBN: 978-1-4244-8543-7**
• **MIHAI CIOBOTARU ET AL: "Accurate and Less-Disturbing Active Antiislanding Method Based on PLL for Grid-Connected Converters", IEEE TRANSACTIONS ON POWER ELECTRONICS, INSTITUTE OF ELECTRICAL AND ELECTRONICS ENGINEERS, USA, vol. 25, no. 6, 1 June 2010 (2010-06-01), pages 1576-1584, XP011299673, ISSN: 0885-8993**
• **A. MOALLEM ET AL.: 'An Anti-islanding Protection Scheme for Gridconnected Distributed Power Generation Systems' IEEE, [Online] 2010, XP031857949 Retrieved from the Internet: <URL:http://ieeexplore.ieee.org/stamp/stamp .jsp?arnumber=05698662>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **MIHAI CIOBOTARU ET AL.: 'Accurate and Less-Disturbing Active Antiislanding Method Based on PLL for Grid-Connected Converters' IEEE TRANSACTIONS ON POWER ELECTRONICS, [Online] vol. 25, no. 6, June 2010, XP011299673 Retrieved from the Internet: <URL:http://ieeexplore.ieee.org/stamp/stamp .js p?arnumber=05378579>**
- **JAE-HYUNG KIM ET AL.: 'A Novel Islanding Detection Method using Goertzel Algorithm in Grid-Connected System' INTERNATIONAL POWER ELECTRONICS CONFERENCE., [Online] 2010, pages 1994 - 1999, XP031728402 Retrieved from the Internet: <URL:http://ieeexplore.ieee.org/stamp/stamp .js p?arnumber=05543215>**
- **DANIEL PERSSON: 'Islanding detection in power electronic converter based distributed generation' DEPT. OF INDUSTRIAL ELECTRICAL ENGINEERING AND AUTOMATION, [Online] 14 February 2007, LUND UNIVERSITY, XP055126972 Retrieved from the Internet: <URL:http://www.iea.lth.se/publications/MS-Theses/Full%20document/52 32 Islanding Detection in Power Electronic_Converter_Based_Distributed_Gene ration.pdf>**
- **HOUSHANG KARIMI ET AL.: 'Negative-Sequence Current Injection for Fast Islanding Detection of a Distributed Resource Unit' IEEE TRANSACTIONS ON POWER ELECTRONICS, [Online] vol. 23, no. 1, January 2008, pages 298 - 307, XP011198585 Retrieved from the Internet: <URL:http://ieeexplore.ieee.org/stamp/stamp .js p?arnumber=04399648>**

## EP 2 683 050 B1

**Description**

## FIELD OF THE INVENTION

The present invention concerns a process and a device which are designed to detect island operation of electrical energy generators (photovoltaic inverters, wind and diesel generators, etc.), i.e. to detect that one of these generators is disconnected from the system to which it supplies electric current. The purpose of this detection of island operation is to protect against damage the loads which are connected in the bars of the generator, by disconnecting them or stopping the generator.

The method and device which are the subject of this patent can be associated with the set of generators of an installation, or with each of them individually; i.e. the invention can be integrated in each of the generators, or it can be introduced into the installation as a separate element.

## PRIOR ART

A method according to the preamble of claim 1 is disclosed in MOALLEM A ET AL: "An anti-islanding protection scheme for grid-connected distributed power generation systems",POWER, CONTROL AND EMBEDDED SYSTEMS (ICPCES), 2010 INTERNATIONAL CONFERENCE ON, IEEE, PISCATAWAY, NJ, USA, 29 November 2010 (2010-11-29), pages 1-5, XP031857949. Another method for detecting islanding operation of a distributed generator is disclosed in EP 1 764 894 A1. As the result of the activation of protection of the system in an installation for generation of electrical energy to the supply network, the circuit may be opened by means of an automatic switch, a differential or another device for this purpose; disconnection of the electrical network then occurs, and the generator is isolated, and supplies to the load connected to it. If the load has a high Q factor (Q = ratio between the reactive power managed by the load and the active power consumed by the load), then the generator continues to generate energy, which is not absorbed by the electrical network, and has to be dissipated in this load. Since generators such as solar and wind inverters etc. generate current, it often happens that they do not provide adequate voltage when they are operating in island mode, such that there may be cases in which the load is destroyed. It may sometimes also happen that, for example, because of a slight variation of consumption of active power by the load, the system behaves in an unstable manner, even though the voltage and frequency at the terminals of the aforementioned load may be sufficiently close to those of operation in normal conditions (not in island mode). Therefore, it is necessary to detect as soon as possible the condition of island operation, in order to proceed to disconnect the electric generator(s) involved in the event. Consequently there also exist regulations in this respect which make it necessary to detect and solve the problem within a limited time.

In order to achieve this objective, use is made of various systems which correspond to two distinct concepts, in other words passive detection systems and active detection systems.

By means of the passive detection systems there is measurement only of the most important magnitudes (voltage at the terminals of the generator and of the load, electric frequency of the system, distortion of voltage, etc.). When some of the values measured are outside the specifications, it is assumed that island operation is taking place, and it is possible to proceed to disconnect the loads and/or the generators. The disadvantage of these systems is that, if the electrical network being generated is of low quality, there can be false detections of the condition of island operation (known hereinafter as island condition or island).

As an alternative to these systems, there has been development of active detection methods which are based on the functional concept that the generator(s) produce(s) permanent disturbance in the system which is propagated or amplified only when the island condition exists, thus resolving the problem of false detections of the passive detection systems.

Amongst the active detection systems, the following can be distinguished (by way of applicative example specific reference is made to solar inverters):

a) PJD (Phase Jump Detection). This consists of detection of a sudden phase jump which arises when the transition from normal operation to island operation takes place. The problem is that there can also be phase jumps in the network which result in false detections. In order to avoid this, the sensitivity is reduced, and the detection may then not be adequate.

b) Detection of harmonics. This consists of the fact that in normal operation (with the network connected) the network imposes the voltage of the system, because of its low impedance. However, in island operation, the impedance is that of the load, and is far greater than that of the network. Since solar inverters usually generate current harmonics, in normal operation they are absorbed by the network, however in island operation the voltage distortion increases since the impedance modulus for the harmonics has increased when operating in island mode. The network impedance is always smaller than that of the load, and therefore the product of a current harmonic for these impedances

3

(which is translated into a voltage harmonic), is far greater in island operation, a condition which can be detected for the purposes required. The problem is that there are regulations which make it necessary to have low current distortion, since this is the factor of merit for the inverter (generator), and consequently when the distortion decreases, the current harmonics are so small that they make it impossible to distinguish between normal or island operation.

c) Measurement of the impedance. This is similar to the above method, with the difference that there is now estimation of the impedance of the system by varying or pulsing the current, and therefore the active power generated. There is then observation of the repercussion on the variation of the voltage in the bars which are common to the generator and the load, since this will be greater when the system is working in island operation. A serious disadvantage of this detection method is the large amount of power modulation necessary in order to distinguish whether or not the system is in island operation. In addition, in the solar cells, there is only one active power point from which the maximum power is extracted, such that, if this power is varied, the energy supplied is less. This is not a good thing because of the high cost of the photovoltaic cells, from which it is necessary to obtain the maximum power they can provide at all times, for the purposes of amortisation.

d) SMS (Slip-Mode frequency Shift). This is based on positive feedback of the frequency of operation, which can only arise when the system is in island operation. In this system, the solar inverter is synchronised with the network by means of a PLL (Phase Locked Loop), which tends to increase (or decrease) the frequency when it is not connected to the network, thus ultimately detecting a frequency outside the limits. In this method, one of the disadvantages is that, before the disconnection, the loads necessarily have to withstand this change of frequency. Another similar method consists of doing the same thing with the phase as for the frequency. The result is the same, with the same disadvantages. In both of the above systems in this section, the disturbances of the network can give rise to instability of the system, and poor quality of supply. There may also be failure if these are inverters functioning in parallel with gain parameters which are somewhat different.

e) Sandia Frequency Shift (from Sandia National Laboratories in the USA). This is similar to the above systems, and also unstable since it also uses positive frequency feedback.

f) Sandia Voltage Shift (voltage shift with positive feedback). The same applies as for the above systems, but using positive voltage feedback. The disadvantages are the instability caused by the positive feedback, and a small reduction in the performance of the solar cells.

These are the methods most commonly used. The ones with positive feedback affect the stability, and therefore the quality of the network.

## EXPLANATION OF THE INVENTION, AND ADVANTAGES

The present invention proposes a method and a device for detection of island operation in distributed electricity generation, and for protection of the connected loads in the bars of the generators when island operation occurs, according to the independend claims. According to the method, the following is postulated as a characteristic:

- in addition to the power generation current $i_1$ specific to the electrical generating system, there is production of a supplementary current $i_2$ both in normal operation and in island operation;
- the supplementary current $i_2$ has a value which is very much lower than that of the power generation current $i_1$;
- the power generation current $i_1$ and the supplementary current $i_2$ are added together;
- measurement is made of the value of the voltage of response to the stimulation introduced into the system by the addition of the power generation current $i_1$ and the supplementary current $i_2$;

the supplementary current $i_2$ is formed from the power generation current $i_1$ by means of a mathematical operation in which the phasor (wave vector) of the power generation current $i_1$ is multiplied firstly by a constant k with a value which is very small compared with that of the unit, meaning that the supplementary current $i_2$ is much smaller than the power generation current $i_1$, and secondly, by a factor which gives rise to a signal with angular wave displacement (p in an anticlockwise direction, of the supplementary current $i_2$ in relation to the power generation current $i_1$;

- the angle $\varphi$ is preferably 90°;
- the signal displaced by an angle $\varphi$ is multiplied by a periodic time function with a pulse which will be known as the modulation omega wm, and will be added to, or remains with, the network omega wr;
- preferably, the periodic time function with the modulation omega pulse wm is a sinusoidal function;
- the signal displaced by an angle $\varphi$ is converted into current which is input in the terminals of the assembly formed by the generator 1 and the load 2;
- there is continual reading of the voltage at the terminals of the generator-load assembly 1-2, and, by means of a digital processor 9 which can carry out digital filtering of the signal and/or carry out its discrete Fourier transformation over a period of time, there is measurement of the spectral amplitude of the different frequencies, and comparison is carried out with a predetermined value, above which the electrical generating system would be in island operation;

- the digital processor 9 is tuned to wr+wm or to wr-wm.

In order to be used in this method, the device according to the invention consists of a current transducer installed between the electric generator and the load, a mathematical operator, a multiplier, a sinusoidal generator, a controlled current generator, a digital processor, a first comparator with the set value wr+wm, a second digital comparator with the set value wr-wm, and an OR logic gate, wherein the current transducer is connected between the electric generator and a mathematical operator located in a digital signal processor (DSP) or a microprocessor, the multiplier is connected to the mathematical operator, to the sinusoidal generator, and to the controlled current generator, which in turn is connected to the terminals of the load which, in turn, are connected to a digital processor, the output of which is connected to a said first digital comparator and second digital comparator which have their output connected to the OR logic gate. Hereinafter, a preferred composition of this device according to the invention will be explained.

As far as the method is concerned, according to the above described characteristics, the following mode is developed:

The currents $i_1$ and $i_2$ are defined by the expressions:

$$(1) \quad i_1 = I_{max} \ast cos(wr \ast t + \varphi)$$

$$(2) \quad i_2 = I_{max} \ast k \ast sin(wm \ast t) \ast sin(wr \ast t + \varphi)$$

Wherein:

- $I_{max}$: maximum current of the circuit
- wr: network omega
- wm: modulation omega
- t: time
- k: constant
- $\varphi$: Displacement angle

The total current would be the sum of (1) and (2), i.e.:

$$(3) \quad I_{max} \ast cos(wr \ast t + \varphi) + I_{max} \ast k \ast sin(wm \ast t) \ast sin(wr \ast t + \varphi)$$

When simplified, this equation is converted into:

$$(4) \quad I_{max} \ast (cos(wr \ast t + \varphi) + 1/2 \ast k \ast (cos((wr - wm) \ast t + \varphi) cos((wr + wm) \ast t + \varphi))$$

If everything is divided by $I_{max}$:

$$(5) \quad cos(wr \ast t + \varphi) + 1/2 \ast k \ast (cos((wr - wm) \ast t + \varphi) - cos((wr + wm) \ast t + \varphi))$$

When the equipment is operating in island mode, the current expressed in the equation (4) multiplied by the impedance of the load LCR (standard circuit formed by a coil L, a capacitor C and a resistor R, and known as the "load" in the figures) will produce a voltage at the terminals of the load LCR which will contain the same frequential components ((wr+wm) and (wr-wm)) as the said current with specific amplitudes.

However, in normal operation, since the network impedance is far lower than that of the circuit LCR, the product of the current expressed in (4) for the network impedance will provide a voltage at the terminals of the load LCR which is far lower for the components(wr+wm) and (wr-wm) than in island operation. Detecting the amplitude of these components equates to determining whether the system is operating in island mode or not. If the amplitude of these components is greater than a predetermined value, the operation is in island mode.

In the equation (5) it can be seen that there is a pulse component wr, another pulse component (wr-wm), and a third pulse component (wr+wm), in other words a spectrum of three well differentiated frequencies.

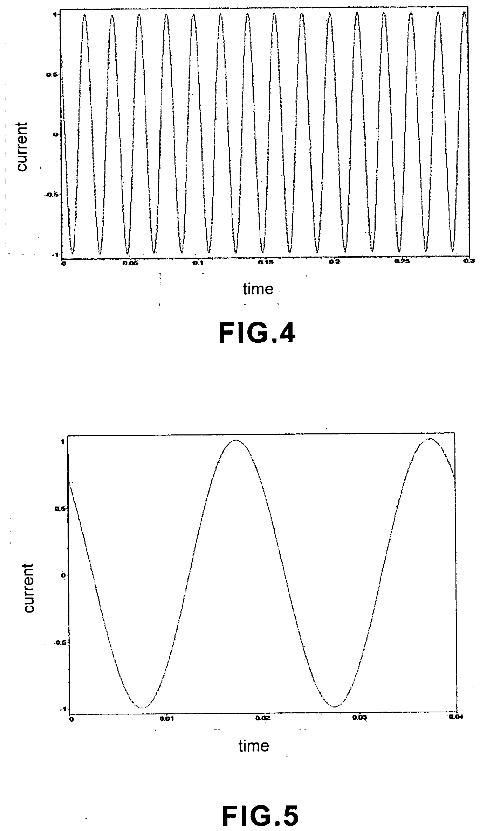

If the function expressed in (5) is expressed graphically for k=0.05 wr=2*δ*50, wm=2*δ*10, the result shown in figure 4 is obtained. Figure 5 shows the detail of this figure 4.

The supplementary current generated $i_2$ does not affect the harmonic distortion, and affects the power factor very little. According to the formula:

$$(6)\ FP = 2^{(1/2)}/(2+k^2)^{(1/2)}, \text{ where FP is the power factor:}$$

$$(7)\quad FP = \frac{\sqrt{2}}{\sqrt{2+k^2}}$$

In the above example, for k=0.05, the power factor (FP) = 0.9993755849; this shows how little the power factor is affected, and how the harmonic distortion is not affected at all. This also means that neither the quality nor the stability of the network are affected, since there is no positive feedback of any variable of the system.

If $\mu$ (mu) is the ratio of wm/wr, the modulus of the impedance of the load LCR in relation to R according to $\mu$ for the pulse (wr+wm) is provided by the following expression:

$$(8)\quad \left| \frac{1 + \mu}{\sqrt{4\ Q^2\ \mu^2 + 4\ Q^2\ \mu^3 + Q^2\ \mu^4 + 1 + 2\ \mu + \mu^2}} \right|$$

and for the pulse (wr-wm):

$$(9)\quad \left| \frac{-1 + \mu}{\sqrt{4\ Q^2\ \mu^2 - 4\ Q^2\ \mu^3 + Q^2\ \mu^4 + \mu^2 - 2\ \mu + 1}} \right|$$

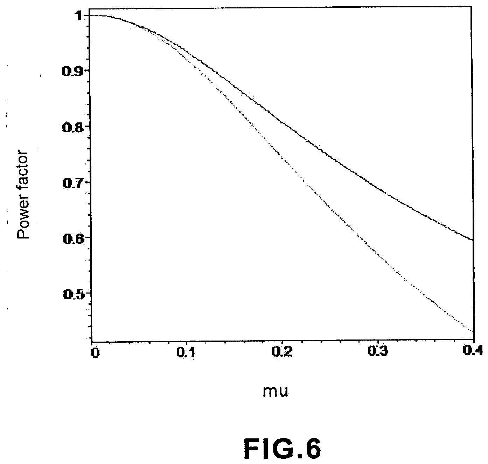

By representing the relative impedance for some values of $\mu$ and for Q=2 (standard value), the representation shown in figure 6 is obtained.

In particular for $\mu$ =0.2, the impedance values of the LCR relating only to the R are:

$$\text{For (wr+wm), } Z_{(wr+wm)}/Z_{wr} = 0.8064049958$$

$$\text{For (wr-wm), } Z_{(wr-wm)}/Z_{wr} = 0.7432941461$$

These impedances are very large compared with the network impedance per unit in a normal installation, such that it is easy to distinguish island operation of the network.

The detection of the frequential voltage component(s) at the terminals of the load of (wr-wm) and of (w+wm) can be carried out by using digital band pass filters or by means of filtering by discrete Fourier time transformation (DTFT), by means of which it will be possible to measure and distinguish the components(wr+wm) and (wr-wm).

These components will be very much greater when the system is working in island mode than when connected to the network. When connected to the network, the assembly LCR has an impedance of 0.1 PU (per unit or for one), compared with 0.8064049958 PU and 0.7432941461 PU when it is in island mode. The voltages of (wr+wm) and (wr-wm) present in the bars of the load will have approximately the same relative values as those of impedance in network and in island operation.

In comparison with the systems previously summarised for passive and active detection, the method provides numerous significant advantages, such as the following:

1. Excellent stability, since no positive feedback of any variable of the system is used, because, as is known universally, the use of this feedback produces instability and affects negatively the quality of the electrical network 13. As indicated, a large number of the known patents for active detection of island operation use positive feedback.

2. It does not affect the quality of the electrical network 13.

3. It does not affect the power factor.

4. It does not affect the harmonic distortion.

5. There is a very small range of uncertainty in the detection of island operation, since, as previously stated, there is a large difference of impedance between the load 2 and the electrical network 13.

6. The active power is not in pulse form for the case of φ=0, which is the normal case, and there is very little pulse for other values of φ (reactive generation), which leads to a better supply of the solar cells.

7. It is easy to implement in its integrated version in the inverter or as an independent system.

8. There is good functioning with solar inverters in parallel.

## DRAWINGS AND REFERENCES

For better understanding of the nature of the invention, the attached drawings represent an industrial embodiment which is of a purely illustrative and non-limiting nature.

Figure 1 is a diagram of a system for generation of distributed electricity which does not include the subject of the invention, and is operating in island mode, since the network circuit is open. In this case, the function is carried out by a conventional electric generator 1.

Figure 2, in a manner similar to figure 1, shows a diagram of a preferred execution of the invention, connected to an installation as in figure 1, and applied to the case in which the controlled current generator 8 is a solar inverter.

Figure 3 is a diagram similar to figure 2, relating to a preferred embodiment, in which the device which is the subject of the invention is integrated in a solar inverter.

In these figures, the following references are indicated:

1 - Electric generator of the system
2 - Load between terminals of the generator 1
3 - Current transducer
4 - Mathematical operator
5 - Multiplier
6 - Adder
7 - Sinusoidal generator
8 - Controlled current generator
9 - Digital processor
10 - First comparator
11 - Second comparator
12 - OR logic gate
13 - Electric network
14 - Set value
$i_1$ - Power generation current
$i_2$ - Supplementary current
φ - Displacement angle of $i_2$ in comparison with $i_1$
wm- Modulation omega
wr - Network omega
k - Constant
t - Time
$I_{max}$- Maximum current of the circuit.

## DESCRIPTION OF A PREFERRED EMBODIMENT

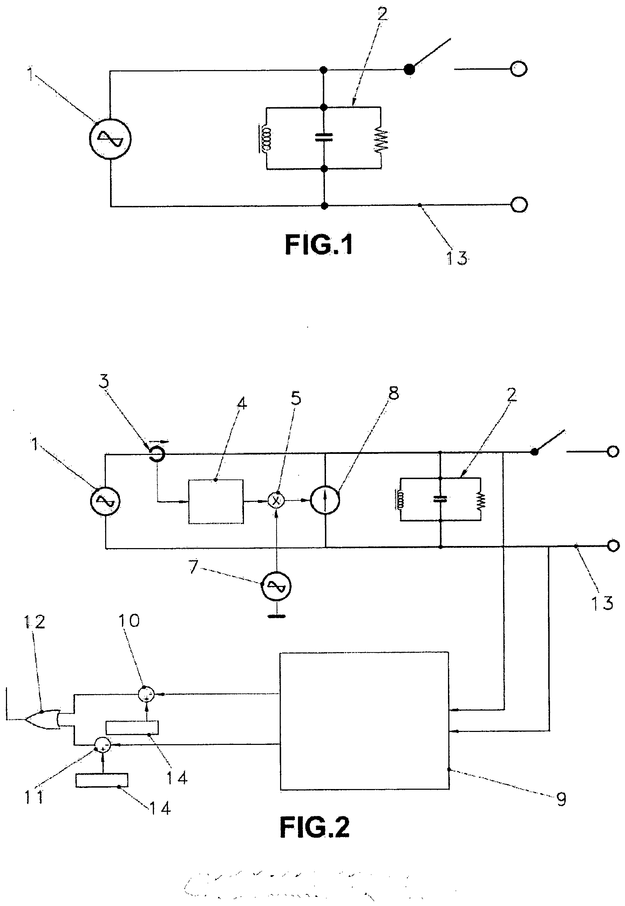

In relation to the diagrams and the above references listed, the appended drawings illustrate a preferred embodiment of the subject of the invention, which relates to a method and device for detection of island operation in distributed electricity generation, and for protection of the connected loads in the bars of the generators when island operation occurs. Figure 1 shows a diagram of island operation for an electric generator 1 of a conventional distributed electricity generation system, which supplies a load 2 constituted by a circuit of the type LCR which incorporates an inductor, a capacitor and a resistor, which is compulsory for the experiment according to the regulations in this respect.

As far as the method of the invention is concerned, the information given in detail in the preceding description applies, which explains the invention and its advantages.

According to the invention, the device for implementing the method consists of a current transducer 3 installed between the electric generator 1 and the load 2, a controlled current generator 8, and a digital processor which carries out the mathematical and logic operations of rotation of the current phasor 4, multiplication 5, sinusoidal generation 7, synchronised band pass filtering or DTFT 9, comparison 10 with the set value of an appropriate real value number to be compared with the voltage modulus of the component (wr+wm), a second digital comparator 11 with the set value of an appropriate real value number to be compared with the voltage modulus of the component (wr-wm), and an OR logic gate 12, wherein the current transducer 3 is connected between the electric generator 1 and the mathematical operator 4 which is located in a digital signal processor (DSP) or a microprocessor, the multiplier 5 is connected to the mathematical operator 4, to the sinusoidal generator 7 and to the controlled current generator 8, which in turn is connected to the terminals of the load 2, which in turn are connected to a mathematical operator 9, the outputs of which are connected to a said first 10 and second 11 digital comparator, the output of which is connected to the OR logic gate 12. The electric generator 1 can be a solar inverter, a synchronous machine, an asynchronous machine, etc.

With reference to the preferred embodiment of the diagram in figure 2, the operation of the device proposed consists in that the current generated $i_1$ passes via a current transducer 3 which measures it and converts it into a voltage (represented by a phasor), in order to be captured by a digital signal processor device (DSP) or microprocessor. The mathematical operator 4 represents the operation by means of which the phasor is multiplied by a real constant k which is smaller than a unit, and rotates by 90° the phase of the current measured, in an anticlockwise direction. The result of this is multiplied by means of a multiplier operator 5, for a sine function generated in a sinusoidal generator operator 7, the argument of which is wm*t, i.e. the modulation pulse by time. The result of this multiplication is conveyed to a controlled current generator 8 which produces an output current which is conveyed to the bars or terminals of the electrical network-load assembly 1-2. A new calculation operation 9 is carried out wherein, by means of A/D (analogue/digital) conversion, the voltage at the bars in question is read, or filtering takes place by means of a digital filter, or discrete Fourier time transformation (DTFT) is carried out, such that there is transition from a time domain to a frequency domain, for analysis. The output of the calculation operation 9 provides the magnitude of the components of wr+wm and wr-wm, which are compared with a set value provided in the first comparator 10 and in the second comparator 12. Either of the above two voltage components which is greater than the set value, on the basis of an OR logic function 13 will generate a signal (digital value 0 or 1), which indicates that island operation is taking place and that the generator must be stopped.

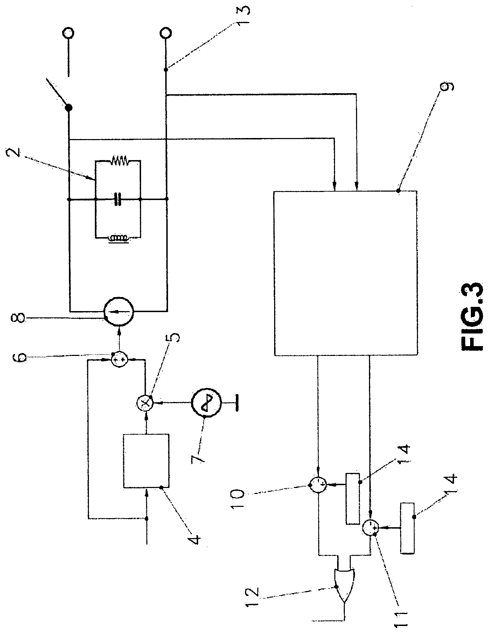

With reference now to the preferred embodiment of the diagram in figure 3, the difference is that the device according to the invention, instead of being an independent system of the electric generator 1, is incorporated in the latter, and relates also to a controlled current generator 8 which, as previously described, is in the form of a solar inverter. In this configuration, since a solar inverter has a processor for its own operation, and power semiconductors which can operate as previously described, it is possible to avoid adding some of the components shown in figure 2, by making use of the calculation capacity of this processor. Specifically, it is not necessary to have the current transducer 3, since the set value for current generation, controlled by the processor, is already known.

**Claims**

1. Method for detection of island operation of distributed electricity generators (1) and for protection of loads (2) connected to bars of the generators when island operation occurs, the method comprising producing a supplementary current (i2) both during normal operation and during island operation, in addition to a power generation current (i1), the power generation current (i1) having a first angular frequency (wr); wherein the supplementary current (i2) is produced with a much lower value than the power generation current (i1); **characterised in that** the supplementary current (i2) is formed from the power generation current (i1) by:

   - rotating a phasor of the power generation current (i1) by 90°;
   - and multiplying the rotated phasor by a sinusoidal function with a second angular frequency (wm).

2. Method according to claim 1, **characterised in that** the power generation current (i1) and the supplementary current (i2) are added together.

3. Method according to claim 2, **characterised in that** the method further comprises:

   - continuously measuring a response to a stimulation introduced by the addition of the power generation current (i1) and the supplementary current (i2);
   - computing a discrete Fourier transformation of the measured response;
   - comparing the computed discrete Fourier transformation with a predetermined value at the sum of the first angular frequency (wr) and the second angular frequency (wm) and at the subtraction of the first angular frequency (wr) and the second angular frequency (wm).

4. Device for detection of island operation of distributed electricity generators (1) and for protection of loads connected to bars of the generators when island operation occurs, **characterised in that** the device comprises:

- a mathematical operator (4) configured to rotate 90° a phasor of a power-generating current (i1) having a first angular frequency (wr);
- a sinusoidal generator (7), configured to generate a sinusoidal function;
- and a multiplier configured to produce a supplementary current (i2) both during normal operation and during island operation by multiplying the sinusoidal function and the rotated phasor.

5. Device according to claim 4, further comprising and adder (6) configured to add the power generation current (i1) and the supplementary current (i2).

6. Device according to claim 5, further comprising:

- a digital processor (9) configured to compute a discrete Fourier transformation of a response to a stimulation introduced by the addition of the power generation current (i1) and the supplementary current (i2);
- a first comparator (10) configured to compare the computed discrete Fourier transformation with a predetermined value at the sum of the first angular frequency (wr) and the second angular frequency (wm);
- a second comparator (11) configured to compare the computed discrete Fourier transformation with the predetermined value and at the subtraction of the first angular frequency (wr) and the second angular frequency (wm).

**Patentansprüche**

1. Verfahren zur Erkennung eines Inselbetriebs von dezentralen Stromgeneratoren (1) und zum Schutz von Lasten (2), die mit Stäben der Generatoren verbunden sind, wenn der Inselbetrieb stattfindet, wobei das Verfahren das Produzieren eines zusätzlichen Stroms (i2) sowohl während des Normalbetriebs als auch während des Inselbetriebs zusätzlich zu einem Leistungserzeugungsstrom (i1) umfasst, wobei der Leistungserzeugungsstrom (i1) eine erste Winkelfrequenz (wr) aufweist; wobei der zusätzliche Strom (i2) mit einem viel niedrigeren Wert als der Leistungserzeugungsstrom (i1) produziert wird; **dadurch gekennzeichnet, dass** der zusätzliche Strom (i2) aus dem Leistungserzeugungsstrom (i1) gebildet wird durch:

- Drehen eines Zeigers des Leistungserzeugungsstroms (i1) um 90°;
- und Multiplizieren des gedrehten Zeigers mit einer sinusförmigen Funktion mit einer zweiten Winkelfrequenz (wm).

2. Verfahren nach Anspruch 1, **dadurch gekennzeichnet, dass** der Leistungserzeugungsstrom (i1) und der zusätzliche Strom (i2) addiert werden.

3. Verfahren nach Anspruch 2, **dadurch gekennzeichnet, dass** das Verfahren ferner Folgendes umfasst:

- kontinuierliches Messen einer Reaktion auf eine Stimulation, die durch die Addition des Leistungserzeugungsstroms (i1) und des zusätzlichen Stroms (i2) eingeführt wird;
- Berechnen einer diskreten Fourier-Transformation der gemessenen Antwort;
- Vergleichen der berechneten diskreten Fourier-Transformation mit einem vorbestimmten Wert bei der Summe der ersten Winkelfrequenz (wr) und der zweiten Winkelfrequenz (wm) und bei der Subtraktion der ersten Winkelfrequenz (wr) und der zweiten Winkelfrequenz (wm).

4. Vorrichtung zur Erkennung eines Inselbetriebs von dezentralen Stromgeneratoren (1) und zum Schutz von Lasten, die mit Stäben der Generatoren verbunden sind, wenn der Inselbetrieb stattfindet, **dadurch gekennzeichnet, dass** die Vorrichtung Folgendes umfasst:

- einen mathematischen Operator (4), der konfiguriert ist, einen Zeiger eines Leistungserzeugungsstroms (i1) mit einer ersten Winkelfrequenz (wr) um 90° zu drehen;
- einen sinusförmigen Generator (7), der konfiguriert ist, eine sinusförmige Funktion zu erzeugen;
- und einen Multiplikator, der konfiguriert ist, sowohl während des normalen Betriebs als auch während des Inselbetriebs durch Multiplizieren der sinusförmigen Funktion und des gedrehten Zeigers einen zusätzlichen Strom (i2) zu produzieren.

5. Vorrichtung nach Anspruch 4, ferner umfassend einen Addierer (6), der konfiguriert ist, den Leistungserzeugungsstrom (i1) und den zusätzlichen Strom (i2) zu addieren.

6. Vorrichtung nach Anspruch 5, ferner umfassend:

- einen digitalen Prozessor (9), der konfiguriert ist, eine diskrete Fourier-Transformation einer Antwort auf eine Stimulation zu berechnen, die durch die Addition des Leistungserzeugungsstroms (i1) und des zusätzlichen Stroms (i2) eingeführt wird;
- einen ersten Komparator (10), der konfiguriert ist, die berechnete diskrete Fourier-Transformation mit einem vorbestimmten Wert bei der Summe der ersten Winkelfrequenz (wr) und der zweiten Winkelfrequenz (wm) zu vergleichen;
- einen zweiten Komparator (11), der konfiguriert ist, die berechnete diskrete Fourier-Transformation mit dem vorbestimmten Wert bei der Subtraktion der ersten Winkelfrequenz (wr) und der zweiten Winkelfrequenz (wm) zu vergleichen.

## Revendications

1. Procédé pour la détection de fonctionnement en îlot de générateurs d'électricité décentralisés (1) et pour la protection de charges (2) reliées aux barres des générateurs lorsque le fonctionnement en îlot se produit, le procédé comprenant la production d'un courant supplémentaire (i2) aussi bien pendant le fonctionnement normal que pendant le fonctionnement en îlot, outre un courant de production d'électricité (i1), le courant de production d'électricité (i1) ayant une première fréquence angulaire (wr) ; dans lequel le courant supplémentaire (i2) est produit avec une valeur nettement plus petite que le courant de production d'électricité (i1) ; **caractérisé en ce que** le courant supplémentaire (i2) est formé à partir du courant de production d'électricité (i1) :

- en faisant tourner un phaseur du courant de production d'électricité (i1) à 90° ;
- et en multipliant le phaseur tourné par une fonction sinusoïdale avec une deuxième fréquence angulaire (wm).

2. Procédé selon la revendication 1, **caractérisé en ce que** le courant de production d'électricité (i1) et le courant supplémentaire (i2) sont ajoutés ensemble.

3. Procédé selon la revendication 2, **caractérisé en ce que** le procédé comprend en outre :

- la mesure en continu d'une réponse à une stimulation introduite par l'ajout d'un courant de production d'électricité (i1) et du courant supplémentaire i2) ;
- le calcul d'une transformation de Fourier discrète de la réponse mesurée ;
- la comparaison de la transformation de Fourier discrète calculée à une valeur prédéterminée au sommet de la première fréquence angulaire (wr) et de la deuxième fréquence angulaire (wm) et à la soustraction de la première fréquence angulaire (wr) et de la deuxième fréquence angulaire (wm).

4. Dispositif pour la détection de fonctionnement en îlot de générateurs d'électricité décentralisés (1) et pour la protection de charges reliées aux barres des générateurs lorsque le fonctionnement en îlot se produit, **caractérisé en ce que** le dispositif comprend :

- un opérateur mathématique (4) configuré pour faire tourner à 90° un phaseur d'un courant de production d'électricité (i1) ayant une première fréquence angulaire (wr) ;
- un générateur sinusoïdal (7), configured to generate a sinusoidal function;
- et un multiplicateur configuré pour produire un courant supplémentaire (i2) aussi bien pendant le fonctionnement normal que pendant le fonctionnement en îlot en multipliant la fonction sinusoïdale et le phaseur tourné.

5. Dispositif selon la revendication 4, comprenant en outre un additionneur (6) configuré pour ajouter le courant de production d'électricité (i1) et le courant supplémentaire (i2).

6. Dispositif selon la revendication 5, comprenant en outre :

- un processeur numérique (9) configuré pour calculer une transformation de Fourier discrète d'une réponse à une stimulation introduite par l'ajout du courant de production d'électricité (i1) et du courant supplémentaire (i2) ;
- un premier comparateur (10) configuré pour comparer la transformation de Fourier discrète calculée à une valeur prédéterminée au sommet de la première fréquence angulaire (wr) et de la deuxième fréquence angulaire (wm) ;
- un deuxième comparateur (11) configuré pour comparer la transformation de Fourier discrète calculée à la valeur prédéterminée et à la soustraction de la première fréquence angulaire (wr) et de la deuxième fréquence angulaire (wm).

FIG.1

FIG.2

FIG.3

**FIG.4**

**FIG.5**

**FIG.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1764894 A1

**Non-patent literature cited in the description**

- An anti-islanding protection scheme for grid-connected distributed power generation systems. **MOALLEM A et al.** POWER, CONTROL AND EMBEDDED SYSTEMS (ICPCES), 2010 INTERNATIONAL CONFERENCE ON. IEEE, 29 November 2010, 1-5